# EUROPÄISCHE PATENTSCHRIFT

(11) **EP 1 006 307 B1**
(45) Veröffentlichungstag und Bekanntmachung des Hinweises auf die Patenterteilung: **09.10.2002**
(21) Anmeldenummer: 99122891.7
(22) Anmeldetag: 18.11.1999
(51) Int. Cl.: F16L 37/084

(54) **Steckkupplung**
Pin-and-socket coupling
Raccord enfichable

(30) Priorität: 02.12.1998 DE 19855674
(43) Veröffentlichungstag der Anmeldung: 07.06.2000
(73) Patentinhaber: Voss Fluid GmbH + Co. KG, 51688 Wipperfürth (DE)
(72) Erfinder: Hester, Hilmar, 51688 Wipperfürth (DE); Schröer, Bettina, 51688 Wipperfürth (DE)
(74) Vertreter: Zapf, Christoph, Dipl.-Ing.

(56) Entgegenhaltungen:
- EP-A- 0 132 673
- EP-A- 0 373 920
- FR-A- 2 283 380

## Beschreibung

Die vorliegende Erfindung betrifft eine Steckkupplung für Druckmittelsysteme, mit einem Gehäuseteil mit einer Aufnahmeöffnung zum Einstecken eines Steckerteils und mit einem in der Aufnahmeöffnung gelagerten Halteelement zum formschlüssig rastenden Hintergreifen einer Raststufe des Steckerteils in dessen eingestecktem Zustand, wobei das Halteelement derart aus mehreren einzelnen Ringsegmenten sowie einem konzentrischen, die Ringsegmente mit radial wirkender Federkraft beaufschlagenden Federringelement besteht, daß beim Steckvorgang jedes Ringsegment radial gegen bzw. durch die Federkraft beweglich ist.

Eine derartige Steckkupplung ist beispielsweise aus der EP-A-0 373 920 bekannt. Einen bezüglich des Halteelementes ähnlichen Stand der Technik beschreibt zudem auch die US-A-3 398 977.

Bei den bekannten Steckkupplungen sind die Ringsegmente des Halteelementes innerhalb einer Ringkammer des Gehäuseteils gelagert. Daraus resultiert eine recht umständliche Montage, weil die einzelnen Ringsegmente zusammen mit dem Federringelement eingesetzt und dann bis zur endgültigen Montage gegen Herausfallen fixiert werden müssen.

Der vorliegenden Erfindung liegt die Aufgabe zugrunde, eine Steckkupplung der genannten Art zu schaffen, die insbesondere bezüglich des Halteelementes eine vereinfachte Montage gestattet.

Erfindungsgemäß wird dies dadurch erreicht, daß die Ringsegmente in einem ringförmigen Aufnahmekäfig gelagert sind, wobei der Aufnahmekäfig als gesondertes Teil ausgebildet und über eine schnappbare Form- oder Kraftformschlußverbindung innerhalb des Gehäuseteils fixiert ist.

Dadurch, daß die Ringsegmente zusammen mit dem Federringelement in dem Aufnahmekäfig gelagert sind, wird bereits vor dem Einsetzen in das Gehäuseteil eine Vorfixierung erreicht. Das Halteelement läßt sich demzufolge als nur ein einheitliches Teil montieren. Dabei ist auch die Fixierung über die schnappbare Form- oder Kraftformschlußverbindung (Clips-Verbindung) insofern ein besonderer Vorteil, als jegliche Probleme durch Verrutschen oder gar Herausfallen des Halteelementes während oder nach der Montage vermieden werden.

Weitere vorteilhafte Ausgestaltungsmerkmale der Erfindung sind in den Unteransprüchen sowie der folgenden Beschreibung enthalten.

Anhand von bevorzugten, in der Zeichnung veranschaulichten Ausführungsbeispielen soll im folgenden die Erfindung näher erläutert werden. Dabei zeigen:
- Fig. 1: einen Halb-Axialschnitt durch eine erfindungsgemäße Steckkupplung in einer ersten Ausführungsform,
- Fig. 2: eine gesonderte und vergrößerte Darstellung einer Einzelheit aus Fig. 1 in einer halbgeschnittenen Seitenansicht,
- Fig. 3: eine halbgeschnittene Stirnansicht in Pfeilrichtung III gemäß Fig. 2 bzw. einen Schnitt längs der Schnittlinie III-III gemäß Fig. 4,
- Fig. 4: einen Diagonalschnitt durch den Aufnahmekäfig in der Ebene IV-IV gemäß Fig. 3,
- Fig. 5: zwei Halteringsegmente nach der Erfindung in stirnseitiger Draufsicht,
- Fig. 6: eines der Ringsegmente in der Ansicht VI-VI gemäß Fig. 5,
- Fig. 7: eine Darstellung analog zu Fig. 1 einer zweiten Ausführungsform der erfindungsgemäßen Steckkupplung.

In den verschiedenen Figuren der Zeichnung sind gleiche Teile stets mit den gleichen Bezugszeichen versehen und werden daher in der Regel jeweils nur einmal beschrieben.

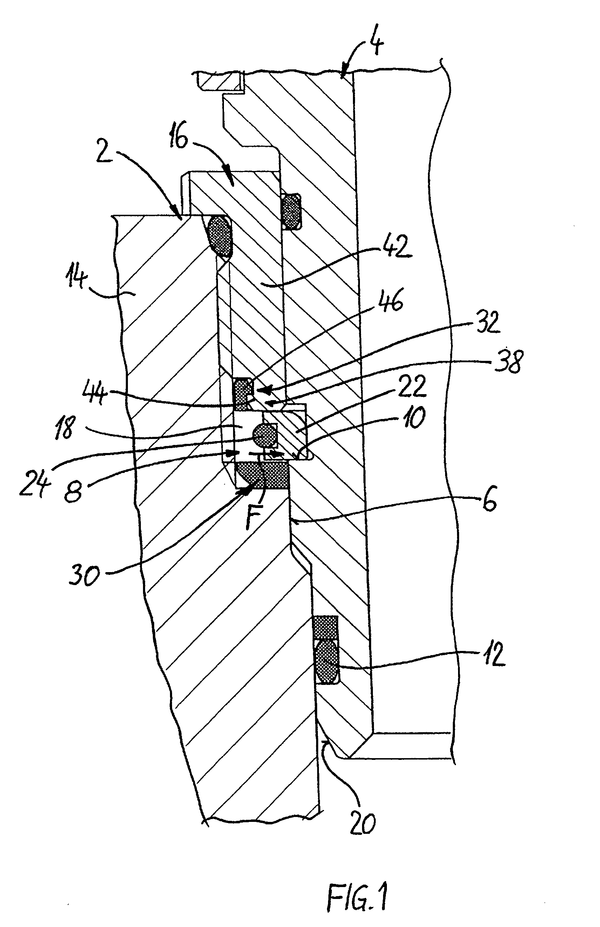

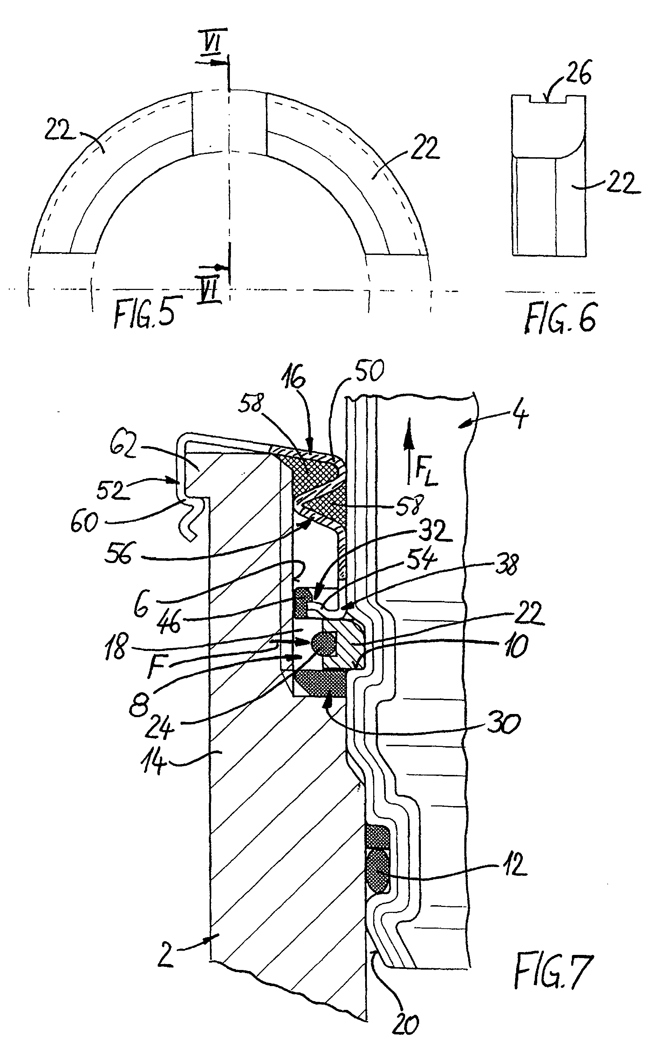

Wie sich zunächst aus Fig. 1 und 7 jeweils ergibt, besteht eine erfindungsgemäße Steckkupplung aus einem Gehäuseteil 2, wobei ein Steckerteil 4 umfangsgemäß abgedichtet in eine Aufnahmeöffnung 6 des Gehäuseteils 2 einsteckbar und im eingesteckten Zustand über eine Verriegelungseinrichtung gegen Lösen arretierbar ist. Hierzu weist die Verriegelungseinrichtung ein in radialer Richtung elastisch verformbares Halteelement 8 auf, welches innerhalb der Aufnahmeöffnung 6 gelagert ist und zum Arretieren des Steckerteils 4 im eingesteckten Zustand eine Raststufe 10 formschlüssig rastend hintergreift. Dieser Verriegelungszustand ist in den Fig. 1 und 7 jeweils dargestellt.

Vorzugsweise ist die Raststufe 10 durch eine Außenringnut des Steckerteils 4 gebildet. Diese Außenringnut weist einen zylindrischen Nutgrund auf, der auf der in Einsteckrichtung weisenden Seite in eine die Raststufe 10 bildende Flankenfläche übergeht. Um eine rein formschlüssige Arretierung zu gewährleisten, schließt der Nutgrund mit der Raststufe 10 einen Winkel von maximal 90° ein. Zur umfangsgemäßen Abdichtung sitzt eine Umfangsdichtung 12 in einer weiteren Ringnut des Steckerteils 4.

Um vor allem eine einfache und schnelle Montierbarkeit der Einzelteile, vor allem des Halteelementes 8, sowie aber auch eine Lösbarkeit der Steckkupplung, d.h. des Steckerteils 4 vom Gehäuseteil 2, zu gewährleisten, besteht das Gehäuseteil 2 aus zwei lösbar miteinander verbundenen Teilen, und zwar aus einem Basisteil 14 und einem Verschlußteil 16. In seinem mit dem Basisteil 14 verbundenen Zustand verschließt das Verschlußteil 16 eine das Halteelement 8 aufnehmende Ringkammer 18 in Richtung der Mündungsseite der Aufnahmeöffnung 6, so daß das Halteelement 8 - und damit auch das Steckerteil 4 - gegen Lösen bzw. Herausziehen arretiert ist.

Zum radialelastischen Spreizen des Halteelementes 8, welches bereichsweise in die Aufnahmeöffnung 6 und damit in den Querschnittsbereich des Steckerteils 4 hineinragt, weist das Steckerteil 4 an seinem freien Ende eine Außenkonusfläche 20 auf.

Das Halteelement 8 ist kreisringförmig ausgebildet, und es besteht derart aus mehreren einzelnen Ringsegmenten 22 (s. hierzu auch Fig. 5 und 6) sowie einem konzentrischen, die Ringsegmente 22 mit radial wirkender Federkraft F beaufschlagenden Federringelement 24, daß beim Steckvorgang jedes Ringsegment 22 insgesamt in radialer Richtung gegen bzw. durch die Federkraft F beweglich ist. Dies bedeutet, daß die Ringsegmente 22 beim Einstecken des Steckerteils 4 zunächst so gegen die Federkraft F radial nach außen verdrängt werden, daß das Steckerteil 4 weiter eingesteckt werden kann. Nachfolgend können sich dann die Ringsegmente 22 aufgrund der Federkraft F wieder radial nach innen zurückbewegen, bis sie die Raststufe 10 rastend formschlüssig hintergreifen.

Bevorzugt weisen die einzelnen Ringsegmente 22 einen im wesentlichen rechteckigen bzw. quadratischen Ringquerschnitt auf (im Radialschnitt gesehen). Dadurch sind die einzelnen Ringsegmente 22 selbst relativ unelastisch und formstabil ausgebildet, so daß sie sich beim Steckvorgang selbst praktisch nicht verformen, sondern nur gänzlich radial bewegen - bezogen jeweils auf ihre radiale, mittige Symmetrielinie. Das elastische Federringelement 24 kann von mindestens einem Drahtfederring, Schraubenfederring, gummielastischen Formring oder dergleichen gebildet sein. Unter einem Schraubenfederring ist eine gewickelte Schraubenfeder mit einem torusförmigen Verlauf zu verstehen. Zweckmäßigerweise besteht das Halteelement 8 aus mindestens drei, in den dargestellten Ausführungsformen insbesondere vier, radialsymmetrisch ausgebildeten und angeordneten Ringsegmenten 22. Da das Federringelement 24 die Ringsegmente 22 außen koaxial umschließt, so daß die radiale Federkraft F radial nach innen gerichtet ist, ist es vorteilhaft, wenn die Ringsegmente 22 auf ihrer radial nach außen weisenden Fläche jeweils eine in Umfangsrichtung verlaufende Aufnahmenut 26 für das Federringelement 24 aufweisen; s. hierzu insbesondere Fig. 6.

Aufgrund der Aufteilung des Halteelementes 8 in die mehreren einzelnen Ringsegmente 22 ist es vor allem für die Montage vorteilhaft, wenn die Ringsegmente 22 in einem Aufnahmekäfig 30 gehaltert sind.

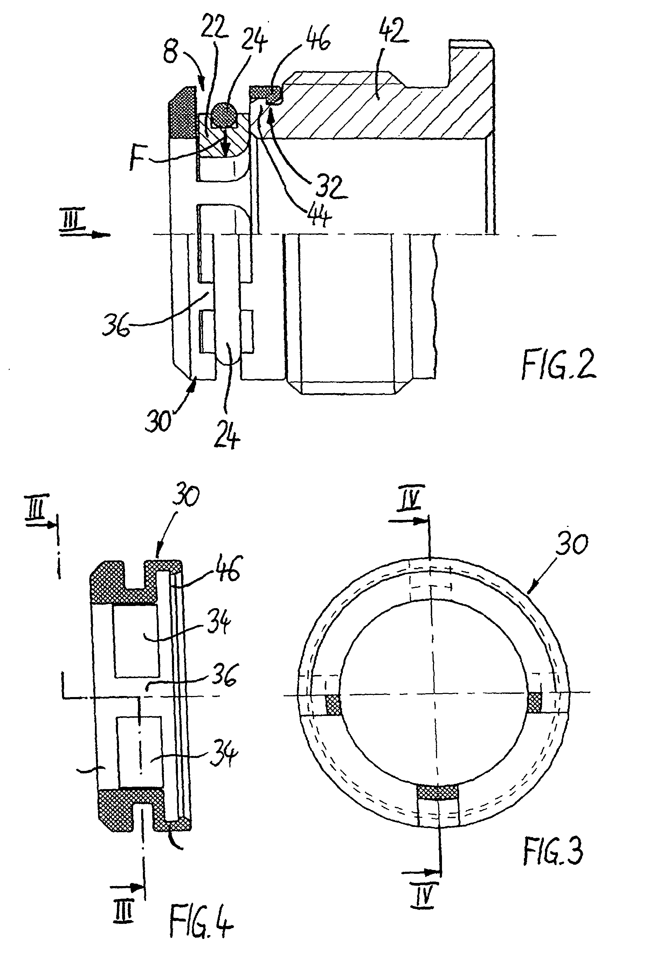

Erfindungsgemäß ist dieser Aufnahmekäfig 30 als gesondertes, ringförmiges Einzelteil (s. insbesondere Fig. 3 und 4) ausgebildet und über eine schnappbare Form- oder Kraftformschlußverbindung 32 (Rast- bzw. Clips-Verbindung) innerhalb des Gehäuseteils 2 fixiert. Vorzugsweise ist der Aufnahmekäfig 30 als einstückiges Formteil aus Kunststoff gebildet. Dabei sollte es sich um einen relativ festen, formstabilen und insbesondere auch temperaturbeständigen Kunststoff handeln, der gerade noch so elastisch ist, daß die Clips-Funktion der Schnappverbindung 32 gewährleistet ist.

Der Aufnahmekäfig 30 weist eine bestimmte radiale Schlitzung derart auf, daß für jedes Ringsegment 22 eine Aufnahmekammer 34 gebildet ist. Die Aufnahmekammern 34 sind in Umfangsrichtung durch jeweils einen axialen Steg 36 voneinander getrennt. Somit sind auch die Ringsegmente 22 selbst in Umfangsrichtung voneinander beabstandet, und zwar etwa um die Umfangserstreckung des jeweiligen Steges 36. Hieraus resultiert auch der Vorteil, daß das Halteelement 8 bzw. die Ringsegmente 22 gemeinsam innerhalb des Aufnahmekäfigs 30 zentriert werden, indem das Federelement 24 auch die Verbindungsstege 36 des Aufnahmekäfigs 30 - bezogen auf die Längsmittelachse - koaxial umschließt.

Wie sich nun weiterhin aus Fig. 1 und 7 jeweils ergibt, ist zweckmäßigerweise vorgesehen, daß der Aufnahmekäfig 30 des Halteelementes 8 über die schnappbare Verbindung 32 mit einem in das Basisteil 14 eingreifenden Halteabschnitt 38 des Verschlußteils 16 verbunden ist.

In der ersten Ausführungsform nach Fig. 1 und 2 ist das Verschlußteil 16 durch ein im wesentlichen hohlzylindrisches, bereichsweise in eine Öffnung des Basisteils 14 einsetzbares Einsatzteil 42, und zwar insbesondere als Überwurfschraube, gebildet. Dieses Einsatzteil 42 weist an seinem in das Basisteil 14 eingesetzten Ende als Halteabschnitt 38 einen Ringkragen 44 auf, der rastend von einem korrespondierenden Ringkragen 46 des Aufnahmekäfigs 30 übergriffen wird.

In der zweiten Ausführungsform nach Fig. 7 ist das Verschlußteil 16 als eine im wesentlichen ringförmige Formfederklammer 50 aus Federblech gebildet. Diese Formfederklammer 50 ist mit einem äußeren Halteabschnitt 52 an dem Basisteil 14 befestigt. Dabei ist der mit dem Aufnahmekäfig 30 verbundene, innere Halteabschnitt 38 durch radiale Stege 54 der Formfederklammer 50 gebildet. Diese Stege 54 wirken mit dem bereits erwähnten Ringkragen 46 des Aufnahmekäfigs 30 rastend zusammen. In weiterer vorteilhafter Ausgestaltung weist die Formfederklammer 50 einen insbesondere im mündungsnahen Bereich der Öffnung des Basisteils 14 sitzenden Dicht- und Klemmabschnitt 56 derart auf, daß durch eine in Löserichtung auf das eingesteckte und arretierte Steckerteil 4 wirkende Kraft F_{L} eine verstärkte Dicht- und Klemmwirkung zwischen Basis- und Steckerteil erreicht wird. Hierbei handelt es sich um eine sekundäre Dichtung (Staubdichtung), während die eigentliche Druckdichtung durch die oben erwähnte Umfangsdichtung 12 gewährleistet ist. Gemäß Fig. 7 ist der Dicht- und Klemmabschnitt 56 durch eine in radialer und axialer Richtung zickzackförmige Verlaufsform der Formfederklammer 50 und durch mindestens eine elastische Umfangsdichtung 58 gebildet. Aus der Zickzackform resultieren im dargestellten Ausführungsbeispiel zwei im Radialschnitt insbesondere etwa dreieckige Ringkammern, die zur Bildung der Umfangsdichtung 58 jeweils mit einem elastischen Dichtungsmaterial gefüllt sind. Durch die Lösekraft F_{L} erfolgt eine Verformung im Bereich des Dicht- und Klemmabschnittes 56 derart, daß es zu einer radialen Klemmwirkung mit entsprechender Verpressung der Umfangsdichtung 58 kommt.

Der äußere Halteabschnitt 52 der Formfederklammer 50 besteht aus mindestens zwei über den Umfang verteilten Federarmen 60, die jeweils einen äußeren Ringkragen 62 des Basisteils 14 rastend übergreifen.

Es sei noch erwähnt, daß im Falle der Ausführung nach Fig. 7 das Steckerteil 4 unmittelbar von einem Rohrende gebildet wird, indem die funktionswesentlichen Abschnitte einstückig durch Stauchung gebildet werden.

Die einzelnen Ringsegmente 22 bestehen aus einem Vollmaterial, insbesondere aus Kunststoff oder Metall.

Weitere Einzelheiten zu dem Halteelement 8 bzw. zu den in dem Aufnahmekäfig angeordneten Ringsegmenten sind auch in der älteren Patentanmeldung DE 197 22 039.8 der Anmelderin enthalten, weshalb an dieser Stelle in vollem Umfange auf diese Anmeldung Bezug genommen wird.

## Patentansprüche

1. Steckkupplung für Druckmittelsysteme, mit einem Gehäuseteil (2) mit einer Aufnahmeöffnung (6) zum Einstecken eines Steckerteils (4) und mit einem in der Aufnahmeöffnung (6) gelagerten Halteelement (8) zum formschlüssig rastenden Hintergreifen einer Raststufe (10) des Steckerteils (4) in dessen eingestecktem Zustand, wobei das Halteelement (8) derart aus mehreren einzelnen Ringsegmenten (22) sowie einem konzentrischen, die Ringsegmente (22) mit radial wirkender Federkraft (F) beaufschlagenden Federringelement (24) besteht, daß beim Steckvorgang jedes Ringsegment (22) radial gegen bzw. durch die Federkraft (F) beweglich ist,
**dadurch gekennzeichnet, daß** die Ringsegmente (22) in einem ringförmigen Aufnahmekäfig (30) gelagert sind, wobei der Aufnahmekäfig (30) als gesondertes Teil ausgebildet und über eine schnappbare Form- oder Kraftformschlußverbindung (32) innerhalb des Gehäuseteils (2) fixiert ist.

2. Steckkupplung nach Anspruch 1,
**dadurch gekennzeichnet, daß** der Aufnahmekäfig (30) als einstückiges Formteil aus Kunststoff gebildet ist.

3. Steckkupplung nach Anspruch 1 oder 2,
**dadurch gekennzeichnet, daß** das Halteelement (8) mindestens drei, vorzugsweise vier, radialsymmetrische Ringsegmente (22) aufweist.

4. Steckkupplung nach einem der Ansprüche 1 bis 3,
**dadurch gekennzeichnet, daß** die einzelnen Ringsegmente (22) selbst relativ unelastisch und formstabil, vorzugsweise mit einem im wesentlichen rechteckigen Ringquerschnitt, ausgebildet sind.

5. Steckkupplung nach einem der Ansprüche 1 bis 4,
**dadurch gekennzeichnet, daß** das radial elastisch verformbare Federringelement (24) von mindestens einem gummielastischen Formring, Drahtfederring, Schraubenfederring oder dergleichen gebildet ist.

6. Steckkupplung nach einem der ansprüche 1 bis 5,
**dadurch gekennzeichnet, daß** das Gehäuseteil (2) aus zwei lösbar verbundenen Teilen besteht, und zwar einem Basisteil (14) und einem Verschlußteil (16), wobei der Aufnahmekäfig (30) des Halteelementes (8) über die schnappbare Verbindung (32) mit einem in das Basisteil (14) eingreifenden Halteabschnitt (38) des Verschlußteils (16) verbunden ist.

7. Steckkupplung nach Anspruch 6,
**dadurch gekennzeichnet, daß** das Verschlußteil (16) durch ein im wesentlichen hohlzylindrisches, bereichsweise in eine Öffnung des Basisteils (14) einsetzbares Einsatzteil (42), insbesondere als Überwurfschraube, gebildet ist, wobei das Einsatzteil (42) an seinem in das Basisteil (14) eingesetzten Ende als Halteabschnitt (38) einen Ringkragen (44) aufweist, der rastend von einem korrespondierenden Ringkragen (46) des Aufnahmekäfigs (30) übergriffen wird.

8. Steckkupplung nach Anspruch 6,
**dadurch gekennzeichnet, daß** das Verschlußteil (16) als Formfederklammer (50) ausgebildet ist, die mit einem äußeren Halteabschnitt (52) an dem Basisteil (14) befestigt ist, und deren innerer, mit dem Aufnahmekäfig (30) verbundener Halteabschnitt (38) als radialer Steg (54) ausgebildet ist, der mit einem Ringkragen (46) des Aufnahmekäfigs (30) rastend zusammenwirkt.

9. Steckkupplung nach Anspruch 8,
**dadurch gekennzeichnet, daß** die Formfederklammer (50) einen im Bereich der Öffnung des Basisteils (14) sitzenden Dicht- und Klemmabschnitt (56) derart aufweist, daß durch eine in Löserichtung auf das eingesteckte und arretierte Steckerteil (4) wirkende Kraft (F_{L}) eine verstärkte Dicht- und Klemmwirkung zwischen Basis- und Steckerteil erreicht wird.

10. Steckkupplung nach Anspruch 9,
**dadurch gekennzeichnet, daß** der Dicht- und Klemmabschnitt (56) durch eine in radialer und axialer Richtung zickzackförmige Verlaufsform der Formfederklammer (50) und durch mindestens eine elastische Umfangsdichtung (58) gebildet ist.

11. Steckkupplung nach einem der Ansprüche 8 bis 10,
**dadurch gekennzeichnet, daß** der äußere Halteabschnitt (52) der Formfederklammer (50) aus mindestens zwei über den Umfang verteilten Federarmen (60) besteht, die jeweils einen äußeren Ringkragen (62) des Basisteils (14) rastend übergreifen.

## Claims

1. Plug-in coupling for pressure-medium systems, having a housing part (2) with an accommodating opening (6) into which a plug part (4) can be plugged, and having a retaining element (8) which is mounted in the accommodating opening (6) and is intended for engaging behind a latching step (10) of the plug part (4), with form-fitting latching action, in the plugged-in state of the latter, the retaining element (8) comprising a plurality of individual ring segments (22), and a concentric spring ring element (24) subjecting the ring segments (22) to radially acting spring force (F), such that, during the plug-in operation, each ring segment (22) can be moved radially counter to and/or by the spring force (F), **characterized in that** the ring segments (22) are mounted in an annular accommodating cage (30), the accommodating cage (30) being designed as a separate part and being fixed within the housing part (2) via a snap-action form-fitting or forceform-fitting connection (32).

2. Plug-in coupling according to Claim 1, **characterized in that** the accommodating cage (30) is formed as a single-piece moulding made of plastic.

3. Plug-in coupling according to Claim 1 or 2, **characterized in that** the retaining element (8) has at least three, preferably four, radially symmetrical ring segments (22).

4. Plug-in coupling according to one of Claims 1 to 3, **characterized in that** the individual ring segments (22) are themselves designed in a relatively non-elastic and dimensionally stable manner, preferably with an essentially rectangular ring cross section.

5. Plug-in coupling according to one of Claims 1 to 4, **characterized in that** the radially elastically deformable spring ring element (24) is formed by at least one elastomeric shaped ring, wire spring ring, helical spring ring or the like.

6. Plug-in coupling according to one of Claims 1 to 5, **characterized in that** the housing part (2) comprises two releasably connected parts, to be precise a base part (14) and a closure part (16), the accommodating cage (30) of the retaining element (8) being connected, via the snap-action connection (32), to a retaining section (36) of the closure part (16), said retaining section engaging in the base part (14).

7. Plug-in coupling according to Claim 6, **characterized in that** the closure part (16) is formed by an essentially hollow-cylindrical insert part (42) which can be inserted, at least in certain regions, into an opening of the base part (14), in particular as a cap screw, the insert part (42) having as a retaining section (38), at its end which is inserted into the base part (14), an annular collar (44), over which a corresponding annular collar (46) of the accommodating cage (30) engages with latching action.

8. Plug-in coupling according to Claim 6, **characterized in that** the closure part (16) is designed as a shaped spring clamp (50) which is fastened on the base part (14) by way of an outer retaining section (52) and of which the inner retaining section (38), which is connected to the accommodating cage (30), is designed as a radial crosspiece (54) which interacts with latching action with an annular collar (46) of the accommodating cage (30).

9. Plug-in coupling according to Claim 8, **characterized in that** the shaped spring clamp (50) has a sealing and clamping section (56), fitted in the region of the opening of the base part (14), such that an enhanced sealing and clamping action is achieved between the base and plug parts as a result of a force (F_{L}) acting in the release direction on the plug part (4) which has been plugged in and arrested.

10. Plug-in coupling according to Claim 9, **characterized in that** the sealing and clamping section (56) is formed by a radially and axially zigzag-like profile of the shaped spring clamp (50) and by at least one elastic circumferential seal (58).

11. Plug-in coupling according to one of Claims 8 to 10, **characterized in that** the outer retaining section (52) of the shaped spring clamp (50) comprises at least two spring arms (60) which are distributed over the circumference and each engage with latching action over an outer annular collar (62) of the base pert (14).

## Revendications

1. Raccord à emmanchement pour systèmes à fluide de pression, comprenant une partie boîtier (2) qui présente une ouverture réceptrice (6) pour l'emmanchement d'une partie mâle (4) et un élément de retenue (8) monté dans l'ouverture réceptrice (6) pour accrocher par l'arrière avec verrouillage par sûreté de forme un épaulement de verrouillage (10) de la partie mâle (4) dans l'état emmanché de cette dernière, l'élément de retenue (8) étant composé de plusieurs segments d'anneau élémentaires (22) ainsi que d'un élément annulaire élastique concentrique (24), qui sollicite les segments d'anneau (22) avec une force élastique (F) agissant radialement, de sorte que, lors de l'opération d'emmanchement, chaque segment annulaire (22) peut se déplacer radialement à l'encontre de la force élastique (F), respectivement sous l'action de cette force,
**caractérisé en ce que** les segment d'anneau (22) sont montés dans une cage réceptrice annulaire (30), la cage réceptrice (30) étant constituée par une partie distincte et étant immobilisée à l'intérieur de la partie boîtier (2) par une liaison encliquetable (32) agissant par sûreté de forme ou par action de force et sûreté de forme.

2. Raccord à emmanchement selon la revendication 1,
**caractérisé en ce que** la cage réceptrice (30) est constituée par une pièce moulée en matière plastique d'un seul tenant.

3. Raccord à emmanchement selon la revendication 1 ou 2,
**caractérisé en ce que** l'élément de retenue (8) présente au moins trois, de préférence quatre, segments d'anneau (22) symétriques en symétrie radiale.

4. Raccord à emmanchement selon une des revendications 1 à 3,
**caractérisé en ce que** les segments d'anneau élémentaires (22) sont en soi relativement inélastiques et indéformables, de préférence avec une section d'anneau sensiblement rectangulaire.

5. Raccord à emmanchement selon une des revendications 1 à 4,
**caractérisé en ce que** l'élément annulaire élastique (24) élastiquement déformable dans la direction radiale, est composé d'au moins une bague de forme élastique à la façon du caoutchouc, d'une bague élastique en fil métallique, d'une bague en ressort hélicoïdal ou analogue.

6. Raccord à emmanchement selon une des revendications 1 à 5,
**caractérisé en ce que** la partie boîtier (2) est composée de deux parties assemblées de façon démontable et, à savoir, d'une partie de base (14) et d'une partie de fermeture (16), la cage réceptrice (30) de l'élément de retenue (8) étant reliée par la liaison encliquetable (32) à un segment de retenue (38) de la partie de fermeture (16) qui s'engage dans la partie de base (14).

7. Raccord à emmanchement selon la revendication 6,
**caractérisé en ce que** la partie de fermeture (16) est constituée par une insertion (42), sensiblement cylindrique creuse, en particulier de la forme d'une vis chapeau, qui peut être insérée dans une région dans une ouverture de la partie de base (14), l'insertion (42) présentant, à son extrémité insérée dans la partie de base (14), pour servir de segment de retenue (38), un collet annulaire (44) qui est accroché par dessus avec effet de verrouillage par une collerette annulaire correspondants (46) de la cage réceptrice (30).

8. Raccord à emmanchement selon la revendication 6,
**caractérisé en ce que** la partie de fermeture (16) est constituée par une agrafe élastique de forme (50) qui est fixée à la partie de base (14) par un segment de retenue extérieur (52) et dont le segment de retenue intérieur (38) relié à la cage réceptrice (30) est constitué par une nervure radiale (54) qui coopère avec effet de verrouillage avec un collet annulaire (46) de la cage réceptrice (30).

9. Raccord à emmanchement selon la revendication 8,
**caractérisé en ce que** l'agrafe élastique de forme (50) présente un segment d'étanchéité et de serrage (56) placé dans la région de l'ouverture de la partie de base (14), de sorte qu'en exerçant une force (F_{L}) qui agit dans le sens de la séparation sur la partie mâle (4) emmanchée et arrêtée, on obtient un effet d'étanchéité et de serrage renforcé entre la partie de base et la partie mâle.

10. Raccord à emmanchement selon la revendication 9,
**caractérisé en ce que** le segment d'étanchéité et de serrage (56) est formé par un profil en zig-zag dans la direction radiale et dans la direction axiale de l'agrafe élastique de forme (50), et par au moins une garniture d'étanchéité circonférentielle élastique (58).

11. Raccord à emmanchement selon une des revendications 8 à 10,
**caractérisé en ce que** le segment de retenue extérieur (52) de l'agrafe élastique de forme (50) est composé d'au moins deux branches élastiques réparties sur la circonférence (60), qui emboîtent chacune une collerette annulaire extérieure (62) de la partie de base (14) avec effet de verrouillage.
